# DEMANDE DE BREVET EUROPEEN

(11) **EP 4 559 652 A1**
(43) Date de publication de la demande: **28.05.2025**
(21) Numéro de dépôt: 24214355.0
(22) Date de dépôt: 20.11.2024
(51) Int. Cl.: B29B 17/00, C08J 11/00, C08G 18/08, C08G 18/28, C08G 18/80

(54) **PROCÉDÉ DE MODIFICATION DE POLYURÉTHANE THERMODURCISSABLE RIGIDE**

(30) Priorité: 22.11.2023 FR 2312854
(71) Demandeur: Commissariat à l'Energie Atomique et aux Energies Alternatives, 75015 Paris (FR)
(72) Inventeur: MORETTO, Enzo, 38054 Grenoble cedex 09 (FR); PILUSO, Pierre, 38054 Grenoble cedex 09 (FR)
(74) Mandataire: Germain Maureau

(57) **Abrégé**

L'invention concerne un procédé d'obtention d'un polyuréthane modifié comprenant les étapes suivantes :
a) fourniture de particules d'un polyuréthane thermodurcissable rigide et d'une solution comportant un solvant et une molécule d'activation comportant une fonction de greffage et une fonction d'activation capable d'abaisser l'énergie d'activation des réactions d'échanges dudit polyuréthane,
b) ajout des particules dudit polyuréthane à ladite solution,
c) application d'un premier traitement thermique pour atteindre une température supérieure à celle de transition vitreuse dudit polyuréthane de sorte à gonfler ledit polyuréthane et à le charger avec la molécule d'activation pour obtenir un polyuréthane imprégné,
d) évaporation du solvant de sorte à obtenir des particules dudit polyuréthane imprégné,
e) application d'un second traitement thermique aux particules de polyuréthane imprégné de sorte que la fonction de greffage forme une liaison covalente avec un isocyanate, dudit polyuréthane imprégné et à obtenir une poudre de polyuréthane modifié.

## Description

La présente invention se rapporte au domaine du post-traitement des polyuréthanes thermodurcissables rigides. En particulier, l'invention concerne un procédé d'obtention d'un polyuréthane modifié et un procédé de remise en forme de ce dernier. Selon un autre aspect, l'invention concerne un polyuréthane modifié permettant de faciliter les réactions d'échanges des liaisons covalentes dynamiques et son post traitement.

Les polyuréthanes thermodurcissables rigides sont utilisés dans de nombreuses applications, requérant robustesse physique, chimique, ainsi qu'une résistance à la chaleur, telles que l'isolation des bâtiments, l'habillage d'intérieur de véhicules ou de pièces de carrosserie, les articles de sport... etc. Sous forme de mousses ou de pièces pleines, ce matériau est généralement obtenu à partir de la polymérisation de polyols et d'isocyanates. La polymérisation se fait généralement par mélange des deux monomères qui réagissent dans un moule pour donner la forme finale à la pièce.

La mise en forme de ce matériau dépend grandement de l'application finale. La polymérisation de polyols et d'isocyanates générant naturellement du CO₂ en présence d'eau, ce polymère se prête particulièrement à la fabrication de mousses. Il est possible d'obtenir des structures non moussées avec une attention particulière portée à la quantité d'eau lors du procédé.

De par la nature des monomères utilisés dans leur fabrication, les polyuréthanes sont généralement réticulés, c'est-à-dire que le matériau polymère final thermodurcissable (donc pas plastique) se présente sous la forme d'un réseau de chaînes interconnectés. Cela donne aux polyuréthanes leur résistance chimique et thermique. Cependant, cet avantage devient un inconvénient lors de la valorisation de ce matériau lors de sa fin de vie. Contrairement aux polymères thermoplastiques (PE, PP, PET, etc) qui peuvent être fondus, les thermodurcissables et en particulier les polyuréthanes thermodurcissables sont infusibles et insolubles, ce qui empêche leur réutilisation sous d'autres formes. Les solutions existantes aujourd'hui pour gérer les PU en fin de vie, ou les déchets de production, sont l'enfouissement, l'incinération et l'utilisation du matériau comme charge dans des pièces neuves. La dernière option limite la gamme de réutilisation du matériau ainsi que les performances des objets ainsi produits.

Une méthode de remise en forme connue utilise des activateurs de réaction d'échange, tirant parti des liaisons chimiques covalentes dynamiques existantes dans les fonctions uréthanes du polyuréthane comme indiqué ci-dessous :

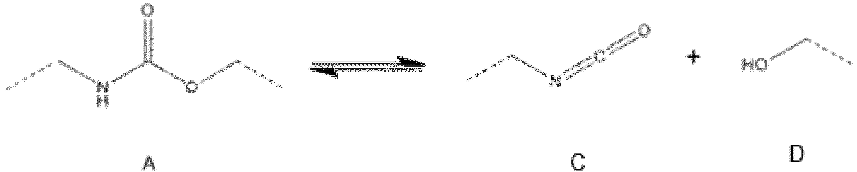

Toutefois, cette méthode se limite à la dissolution d'activateurs dans la matrice du polymère, tels que des composés organométalliques ou des acides et bases organiques, et n'offre pas une solution durable dans le traitement des polyuréthanes en fin de vie. En effet, avec le temps et selon les applications visées, les activateurs migrent hors de la matrice plus ou moins rapidement. Compte tenu du grand nombre d'objets de la vie courante ou de produits industriels qui contiennent du polyuréthane rigide, il est nécessaire de trouver des solutions permettant sa réutilisation par le biais notamment d'une remise en forme.

Ainsi, un des buts de la présente invention vise à pallier les inconvénients précités. Pour ce faire l'invention propose un procédé d'obtention d'un polyuréthane modifié par greffage de manière covalente d'au moins une molécule d'activation, ledit procédé comprenant au moins les étapes suivantes :
a) fourniture de particules de dimension moyenne micrométrique d'un polyuréthane thermodurcissable rigide et d'une solution comportant un solvant et au moins une molécule d'activation qui comprend d'une part une fonction de greffage capable de former une liaison covalente avec un isocyanate dudit polyuréthane thermodurcissable rigide et d'autre part une fonction d'activation capable d'abaisser l'énergie d'activation des réactions d'échanges dans les liaisons chimiques covalentes dynamiques existantes dans les fonctions uréthanes dudit polyuréthane thermodurcissable rigide, ledit solvant étant capable de dissoudre ladite molécule d'activation et présente un point d'ébullition supérieur à la température de transition vitreuse dudit polyuréthane thermodurcissable rigide,
b) ajout desdites particules dudit polyuréthane thermodurcissable rigide à ladite solution de sorte à obtenir une suspension,
c) application d'un premier traitement thermique à ladite suspension sous agitation pour atteindre une température supérieure à la température de transition vitreuse dudit polyuréthane thermodurcissable rigide de sorte à gonfler ledit polyuréthane thermodurcissable rigide et à le charger avec l'au moins une molécule d'activation dans le réseau dudit polyuréthane thermodurcissable rigide de manière à obtenir un polyuréthane imprégné de l'au moins une molécule d'activation,
d) évaporation du solvant de sorte à obtenir des particules dudit polyuréthane imprégné de l'au moins une molécule d'activation,
e) application d'un second traitement thermique aux particules de polyuréthane imprégné de sorte que la fonction de greffage de la molécule d'activation forme une liaison covalente avec un isocyanate dudit polyuréthane imprégné et à obtenir, après refroidissement, une poudre dudit polyuréthane modifié ou
ou réalisation d'une étape i) de disposition des particules de polyuréthane imprégné dans un moule délimitant une cavité d'une 1^{ère} conformation déterminée, suivie d'une étape de thermocompression qui correspond à l'application du second traitement thermique selon l'étape e) et qui comprend en outre l'application d'une pression de sorte à obtenir, après refroidissement, une pièce solide dudit polyuréthane modifié d'une 1^{ère} forme déterminée.

A l'étape a), le polyuréthane thermodurcissable rigide peut être un polyuréthane thermodurcissable rigide en fin de vie ou provenir de chutes de production.

La température de transition vitreuse du polyuréthane thermodurcissable rigide peut être déterminée par calorimétrie différentielle à balayage (« DSC » en anglais qui est l'acronyme pour Differential Scanning Calorimetry) selon la norme internationale ISO 11357-2.

Ainsi, grâce à l'invention, le polyuréthane thermodurcissable rigide est modifié par formation d'au moins une nouvelle liaison covalente avec une fonction d'activation capable d'abaisser l'énergie d'activation des réactions d'échange dans les liaisons chimiques covalentes dynamiques existantes dans les fonctions uréthanes dudit polyuréthane thermodurcissable rigide. Celles-ci permettent le réarrangement de la topologie du réseau du polyuréthane modifié permettant une nouvelle mise en forme. La modification par formation d'une liaison covalente permet d'éviter la migration de la fonction d'activation en dehors du matériau. Ceci garantit au polyuréthane modifié l'acquisition d'une capacité de remise en forme durable dans le temps tout en limitant le risque de migration et la mise en contact de la molécule d'activation avec des utilisateurs.

L'intérêt de la présente invention réside dans le fait que des molécules d'activation présentant une fonction d'activation sont greffées sur un polyuréthane thermodurcissable rigide. On obtient ainsi à l'issue du procédé selon l'invention un polyuréthane modifié qui comporte des fonctions d'activation qui sont capables d'abaisser l'énergie d'activation des réactions d'échanges dans les liaisons chimiques covalentes dynamiques dans les fonctions uréthanes dudit polyuréthane modifié ainsi obtenu ; ce qui permet la remise en forme de ce matériau à chaud.

Par le terme 'imprégner' on entend dans le présent document le fait de mettre en contact intime. Autrement dit, la molécule d'activation pénètre dans le réseau du polyuréthane pour être au plus proche de la fonction isocyanate de sorte à faciliter la réalisation de la réaction de greffage.

On peut définir dans le présent document qu'un polyuréthane est rigide lorsque son élongation à la rupture ne dépasse pas 10% et avec une contrainte à la rupture d'au moins 10MPa. L'application du test de traction et les valeurs d'élongation et de contrainte à la rupture permet de distinguer un polyuréthane rigide d'un polyuréthane souple.

Dans le cas de mousses de PU, les mousses PU rigides possèdent souvent une structure cellulaire fermée alors que les mousses souples présentent généralement des cellules ouvertes.

Comme expliqué ci-dessus, la solution fournie à l'étape a) comprend un solvant capable de dissoudre la molécule d'activation et qui présente un point d'ébullition supérieur à la température de transition vitreuse du polyuréthane. De préférence, il présente des affinités suffisantes avec le polyuréthane pour pénétrer dans le réseau du polymère, et véhiculer l'au moins une molécule d'activation au plus près des fonctions isocyanates. Le solvant est choisi parmi les éthers aromatiques nucléophiles, tel que l'anisole, 3-méthylanisole, l'éthoxybenzene, le diméthoxybiphenyl, le 2-méthoxynaphtalène, le 1.4-diméthoxybenzène ou le 1.2-diméthoxy benzène.

Comme expliqué ci-dessus, les particules dudit polyuréthane fournies à l'étape a) comprennent une dimension moyenne micrométrique, par exemple une dimension moyenne comprise entre 50 et 100 micromètres.

Dans un mode de réalisation de l'invention, l'application du premier traitement thermique selon l'étape c) peut être réalisée jusqu'à atteindre une température comprise entre 110 et 130°C, par exemple une température d'environ 130°C. Ces températures sont en effet au-dessus de la température de transition vitreuse du polyuréthane.

Dans un mode de réalisation de l'invention, l'étape d) peut consister à sécher les particules, par exemple dans un évaporateur rotatif ou dans une étuve placée sous vide. Le séchage garantit un contact intime entre les molécules d'activation et le polyuréthane. Dans un mode réalisation de l'invention, les conditions d'évaporation du solvant peuvent être choisies pour assurer que la molécule d'activation ne soit pas évaporée avec le solvant. Une simple pesée après l'étape d) permet de confirmer que la masse du polyuréthane cumulée à celle de la molécule d'activation est bien retrouvée à l'issue de l'étape d).

Comme expliqué ci-dessus, dans un autre mode de réalisation de l'invention, après l'étape d), le procédé peut comprendre la réalisation d'une étape i) de disposition des particules de polyuréthane imprégné dans un moule délimitant une cavité d'une conformation déterminée, suivie de l'étape de thermocompression qui correspond à l'application du second traitement thermique selon l'étape e) et qui comprend en outre l'application d'une pression, de sorte à obtenir, après refroidissement, une pièce solide dudit polyuréthane modifié de la forme déterminée à l'issue du procédé. En effet, une thermocompression réalisée sur la poudre de polyuréthane modifié, placée dans un moule permet d'obtenir la coalescence des grains de la poudre et sa conformation suivant la forme du moule. Une fois revenue à température ambiante, la nouvelle pièce obtenue présente les propriétés mécaniques du polyuréthane thermodurcissable d'origine.

De plus, l'application d'une pression a vocation à diminuer la durée de l'étape e) et/ou à réduire la température du second traitement thermique. Ce mode de réalisation nécessite l'utilisation d'un dispositif d'application de la pression mais il permet de limiter les risques de perte des propriétés du polyuréthane qui pourrait survenir après un traitement thermique plus fort ou/et plus long que celui nécessaire avec la thermocompression.

De manière avantageuse, préalablement à l'étape i), le moule a été préchauffé.

Selon une caractéristique, la pièce solide en polyuréthane modifié obtenu selon le procédé est une pièce massive. La viscosité du polyuréthane n'est pas suffisamment basse pour permettre de réaliser un moussage par réaction d'eau sur les groupements isocyanates. Ainsi, la remise en forme du polyuréthane modifié permet de former des pièces massives, non moussées.

Dans un mode de réalisation de l'invention, la fonction de greffage de l'au moins une molécule d'activation, destinée à la formation d'une liaison covalente avec le polyuréthane peut être une fonction nucléophile, notamment une fonction alcool ou une fonction amine primaire ou secondaire.

Dans un mode de réalisation de l'invention, la fonction d'activation peut être un acide sulfonique ou une amine tertiaire. L'acide sulfonique peut comprendre une chaîne aromatique ou une chaîne aliphatique. Dans les deux cas, le caractère acide ou basique de la fonction d'activation déstabilise l'uréthane ce qui engendre son ouverture, et la formation d'un alcool et d'un isocyanate.

Dans un mode de réalisation de l'invention, l'au moins une molécule d'activation peut être choisie parmi :
- un acide sulfonique portant des fonctions alcools ou amine, de formule générale R-(SO₃H)ₓ-(OH)_{y}(NH₂)_{z} où R est un radical carboné pouvant être aromatique ou aliphatique, x est le nombre d'acide sulfonique (x>=1), y le nombre de groupement hydroxyl (y>=1) et z le nombre de groupement amine primaire ou secondaire (z>=1) et notamment l'acide 4-hydroxy-3-amino-benzenesulfonique, et/ou
- une amine tertiaire portant un ou plusieurs alcools, de formule générale Nm-(R'OHn)o avec R' un radical carboné (m>=1) (o>=1) portant une ou plusieurs fonctions hydroxyles (n>=1) et notamment la tétra hydroxyéthyl ethylènediamine.

Dans un mode de réalisation de l'invention, le pourcentage massique en molécules d'activation dans la suspension peut se situer dans une plage allant de 0,05% à 10% en masse, et notamment dans une plage allant entre environ 0,1 et 5 % en masse.

Dans un mode de réalisation de l'invention, l'étape de thermocompression peut être réalisée dans une plage de température allant de 120°C à 250°C et une pression comprise entre 30 et 70 bars pendant une durée allant de 1 minute à 40 minutes, notamment à 200°C sous une pression d'environ 40 bars appliquées pendant 20 minutes.

Selon d'autres caractéristiques, le procédé selon l'invention peut comporter une ou plusieurs des caractéristiques optionnelles suivantes considérées seules ou en combinaison :
- Le procédé de modification comprend avant l'étape b) une étape k) de mise en poudre d'au moins une pièce de polyuréthane thermodurcissable et rigide, notamment par broyage ou par micronisation.
- La pièce de polyuréthane thermodurcissable et rigide utilisée à l'étape k) se présente sous forme de mousse.
- Le premier traitement thermique est effectué pendant une heure.
- L'étape d) d'évaporation du solvant peut être complétée par disposition des particules imprégnées à un traitement thermique sous pression réduite, dans des conditions de pression et de température ne permettant pas l'évaporation de l'activateur. En particulier, un traitement thermique à une température maximale de 140°C et une pression de 10 mbar.

Selon un autre aspect, l'invention propose un procédé de remise en forme d'au moins une pièce solide de polyuréthane modifié comprenant les étapes de :
g1) fourniture d'au moins une pièce solide dudit polyuréthane modifié de la 1^{ère} forme déterminée obtenu comme précédemment décrit,
h1) mise en poudre de l'au moins une pièce solide dudit polyuréthane modifié,
i1) disposition de la poudre dans au moins un moule délimitant au moins une cavité d'une 2^{ème} conformation déterminée,
j1) application d'une thermocompression de sorte à obtenir au moins une pièce solide de polyuréthane modifié d'une 2^{ème} forme déterminée.

Une remise en forme par un traitement thermocompressif du polyuréthane modifié peut être effectuée et répétée plusieurs fois du fait que la fonction d'activation est liée par une liaison covalente qui est donc stable, au polyuréthane modifié.

Selon un autre aspect, l'invention propose un procédé de remise en forme d'une poudre de polyuréthane modifié comprenant les étapes de :
1) fourniture d'une poudre dudit polyuréthane modifié obtenue comme précédemment décrit,
2) disposition de la poudre dans au moins un moule délimitant au moins une cavité d'une conformation déterminée,
3) application d'une thermocompression de sorte à obtenir au moins une pièce solide de polyuréthane modifié d'une forme déterminée.

Selon un autre aspect, l'invention propose un polyuréthane modifié par greffage de manière covalente d'au moins une molécule d'activation (B), ladite molécule d'activation (B) comprenant d'une part une fonction de greffage formant une liaison covalente avec un isocyanate dudit polyuréthane modifié et d'autre part une fonction d'activation capable d'abaisser l'énergie d'activation des réactions d'échange dans les liaisons chimiques covalentes dynamiques existantes dans les fonctions uréthane dudit polyuréthane modifié, de sorte à faciliter le réarrangement de la topologie du réseau du polyuréthane modifié. Comme expliqué ci-dessus, une remise en forme par un traitement thermocompressif du polyuréthane modifié selon l'invention peut être effectuée et répétée plusieurs fois du fait que la fonction d'activation est liée par une liaison covalente qui est donc stable, au polyuréthane modifié.

Les propriétés de polyuréthane modifié permettent également de réaliser des opérations de réparation par une étape de traitement de thermocompression.

Dans un mode de réalisation de l'invention, le polyuréthane modifié peut comprendre au moins une fonction d'activation dérivée d'acide sulfonique et/ou d'un groupement d'amine ternaire.

D'autres caractéristiques et avantages apparaîtront à la lecture de la description détaillée ci-après, d'un exemple de mise en oeuvre non limitatif, faite en référence aux figures annexées dans lesquelles :
[Fig. 1] illustre schématiquement les réactions d'échange chimique dynamique en jeu dans le polyuréthane et utilisé dans le procédé selon un mode de réalisation de l'invention.
[Fig. 2] illustre deux types de molécules d'activation utilisées dans le procédé de l'invention.
[Fig. 3] illustre deux exemples de molécules d'activation du procédé de l'invention.
[Fig. 4] illustre les étapes a) à d) du procédé selon l'invention.
[Fig. 5] illustre l'étape e) du procédé selon l'invention.
[Fig. 6] illustre l'étape de thermocompression du procédé selon l'invention.

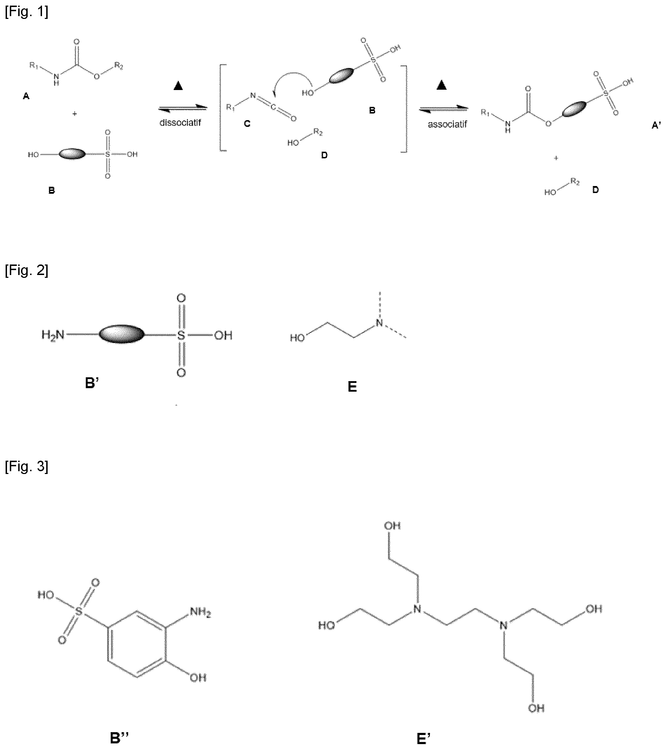

Comme illustré sur la figure 1, le principe utilisé dans le procédé de modification de l'invention tire parti des liaisons chimiques dynamiques et covalentes existantes dans les fonctions uréthanes du polyuréthane (PU - figure 1). Grâce à cela, des réactions d'échange peuvent se produire entre chaînes et réarranger la topologie du réseau de polymère. De ce fait, le réseau de polymère réticulé de PU possède la capacité de passer de caractéristiques de matériaux thermodurcissables à basse température à des caractéristiques de matériaux thermoplastiques à haute température. Les fonctions uréthanes A sont sujettes à des réactions de type associatives (figure 1- a), lors desquelles le taux de réticulation reste constant, ainsi qu'à des réactions dissociatives (fgure 1- d), lors desquelles la liaison uréthane A se décompose en un isocyanate C et un alcool D.

Ces échanges sont contrôlés cinétiquement et ne peuvent se faire qu'une fois la température de transition vitreuse du polymère PU dépassée (conditionne la mobilité nécessaire aux réactions) et qu'une fois la température minimale pour que la réaction se fasse est atteinte, liée à l'énergie d'activation des réactions d'échange. L'invention prévoit alors de greffer de manière covalente au moins une molécule d'activation B au PU permettant d'abaisser l'énergie d'activation des réactions d'échange et de favoriser la réorganisation de la topologie du réseau, conduisant à conférer au PU des propriétés thermoplastiques et la possibilité d'une modification de la forme du PU à l'échelle macroscopique.

La molécule d'activation B comprend d'une part une fonction d'activation, par exemple un groupement acide sulfonique (présent sur les molécules B, B' et B" - figures 1, 2 et 3) ou un groupement amine ternaire (présent sur les molécules E et E' - figures 2 et 3) et d'autre part une fonction de greffage, destinée à former une liaison covalente avec un isocyanate C du PU et conduit à l'obtention d'un polyuréthane modifié A'. La fonction de greffage peut être choisie parmi des fonctions nucléophiles tel qu'un groupement hydroxyl (présent sur les molécules E, E' ou B" - figures 1, 2 et 3) ou un groupement amine primaire (présent sur les molécules B' ou B" - figures 2, 3). La molécule d'activation utilisée dans l'exemple détaillé ci-dessous est la tétra hydroxyéthyl ethylènediamine E' (ou THEED fourni par Sigma Aldrich^{®}). Elle pourrait être remplacée dans un autre mode de réalisation par l'acide 4-hydroxy-3-amino-benzenesulfonique B" (ou 4H,3A-BSA fourni par Sigma Aldrich^{®}).

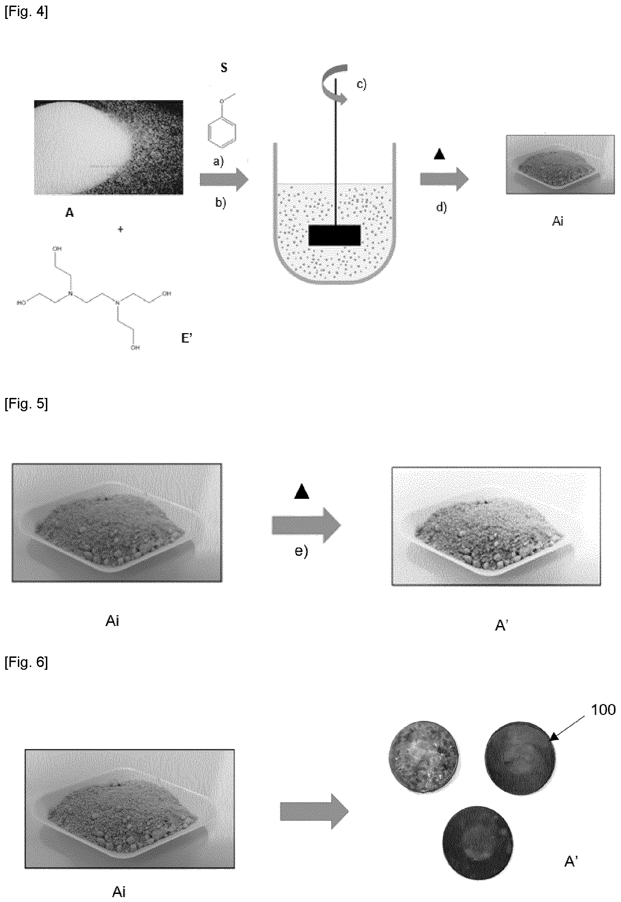

Les figures 4 à 6 illustrent un exemple détaillé du procédé selon l'invention. Il comprend d'une part la fourniture d'une solution de 5 g de THEED en tant que molécule d'activation E' dans un solvant S capable de la dissoudre, et présentant un point d'ébullition supérieur à la température de transition vitreuse du PU. Il s'agit ici d'anisole utilisée dans une quantité de 500 ml (étape a). D'autre part, le procédé prévoit la fourniture d'une pièce de 100g constituée de PU thermodurcissable rigide qui est micronisée (étape k) de sorte à obtenir des particules de PU d'une dimension moyenne située dans l'échelle de quelques dizaines de micromètres. Ces particules sont ajoutées à la solution de sorte à obtenir une suspension de 5% en masse de molécule d'activation E' par rapport au poids du PU ajouté (étape b). La suspension est portée à une température de 130°C pendant 1 h sous agitation de sorte à se situer au-dessus de la température de transition vitreuse du PU et d'assurer une certaine mobilité du réseau (étape c).

Ces conditions de température et d'agitation permettent le gonflement du polyuréthane A et le chargement de la molécule d'activation E' dans le réseau du polymère. Autrement dit cette étape permet l'imprégnation du THEED dans le PU. L'anisole est ensuite évaporé dans un évaporateur rotatif sous vide de sorte à ce que le THEED reste en contact intime avec le réseau de PU récupéré sous forme de particules solides de polyuréthane imprégné Ai (étape d). Selon une variante de réalisation une phase de séchage supplémentaire dans une étuve sous vide et à température plus élevée est réalisée afin de totalement sécher les particules imprégnées.

Selon l'étape e) du procédé illustrée sur la figure 5, les particules imprégnées Ai sont ensuite soumises à un deuxième traitement thermique à une température d'environ 200°C de sorte à obtenir le greffage par formation d'une liaison covalente entre la fonction de greffage et l'isocyanate C. Une fois refroidi, un polyuréthane modifié A' par une fonction d'activation est obtenu sous la forme d'une poudre. A chaud, il est possible de facilement activer les réactions d'échanges dans les liaisons chimiques covalentes dynamiques de ce polyuréthane modifié A' permettant un réarrangement de la topologie du réseau.

Selon une variante de réalisation, l'étape e) est une étape de thermocompression car elle comprend en outre l'application d'une pression permettant de mettre en forme les particules de polyuréthane imprégnée Ai comme illustré à la figure 6. Pour ce faire, les particules de polyuréthane imprégnées Ai obtenues à l'étape d) sont disposées dans un moule d'une forme prédéterminée, à savoir ici un moule d'une forme cylindrique d'un rayon de 3 cm de diamètre préchauffé au préalable (étape i). Un traitement thermocompressif est appliqué avec une température de 200°C pendant 20 min et une pression comprise entre 30 et 70 bars. Les particules coalescent grâce à l'échange d'uréthane activé par la molécule activatrice greffée lors du procédé décrit précédemment, ce qui permet une remise en forme. Une fois refroidi, la remise en forme a conduit à la formation d'une première pièce pleine 100 et homogène en PU modifié A', rigide et réticulé comme à l'origine, présentant des propriétés thermodurcissables.

L'épaisseur de la pièce 100 peut être variée en changeant la quantité de particules Ai ajoutées au moule initialement. La température ainsi que le temps de compression peuvent être ajustés en fonction de l'épaisseur de la pièce désirée. Une ou plusieurs des pièces de polyuréthane obtenue par ce procédé pourra être de nouveau broyée (étape h1) et utilisée dans un procédé de mise en forme par thermocompression (étape i1, j1) pour reformer une nouvelle pièce, d'une forme différente si nécessaire, par exemple en utilisant un moule d'une deuxième conformation rectangulaire de 7 cm x 7 cm.

Ainsi, la présente invention propose un procédé permettant la valorisation et la réutilisation de matériau polyuréthanes thermodurcissables rigides en fin de vie ou provenant de chutes de production avec une moindre dévaluation de matière. La fonction d'activation favorise les réactions d'échange et de dissociation du polyuréthane modifié, ce qui permet la remise en forme du matériau à chaud. Outre la possibilité de remise en forme, le matériau pourra également être réparé par simple application de chaleur et de pression à la localisation d'une éventuelle fissure, entraînant un réarrangement des chaînes localisées, permettant de reformer de manière covalente un réseau partiellement détruit.

## Revendications

1. Procédé d'obtention d'un polyuréthane modifié (A') par greffage de manière covalente d'au moins une molécule d'activation (B), le procédé comprenant au moins les étapes suivantes :
a) fourniture de particules de dimension moyenne micrométrique d'un polyuréthane thermodurcissable rigide (A) et d'une solution comportant un solvant (S) et au moins une molécule d'activation (B) qui comprend d'une part une fonction de greffage capable de former une liaison covalente avec un isocyanate (C) dudit polyuréthane thermodurcissable rigide (A) et d'autre part une fonction d'activation capable d'abaisser l'énergie d'activation des réactions d'échanges dans les liaisons chimiques covalentes dynamiques existantes dans les fonctions uréthanes dudit polyuréthane thermodurcissable rigide (A), ledit solvant (S) étant capable de dissoudre ladite molécule d'activation (B) et présente un point d'ébullition supérieur à la température de transition vitreuse du polyuréthane thermodurcissable rigide (A),
b) ajout desdites particules dudit polyuréthane thermodurcissable rigide (A) à ladite solution de sorte à obtenir une suspension,
c) application d'un premier traitement thermique à ladite suspension sous agitation pour atteindre une température supérieure à la température de transition vitreuse dudit polyuréthane thermodurcissable rigide (A) de sorte à gonfler ledit polyuréthane thermodurcissable rigide (A) et à le charger avec l'au moins une molécule d'activation (B) dans le réseau dudit polyuréthane thermodurcissable rigide (A) de manière à obtenir un polyuréthane imprégné (Ai) de l'au moins une molécule d'activation (B),
d) évaporation du solvant (S) de sorte à obtenir des particules dudit polyuréthane imprégné (Ai) de l'au moins une molécule d'activation (B),
e) application d'un second traitement thermique aux particules de polyuréthane imprégné (Ai) de sorte que la fonction de greffage de la molécule d'activation (B) forme une liaison covalente avec un isocyanate (C) dudit polyuréthane imprégné (Ai) et à obtenir, après refroidissement, une poudre dudit polyuréthane modifié (A')
ou réalisation d'une étape i) de disposition des particules de polyuréthane imprégné (Ai) dans un moule délimitant une cavité d'une 1^{ère} conformation déterminée, suivie d'une étape de thermocompression qui correspond à l'application du second traitement thermique selon l'étape e) et qui comprend en outre l'application d'une pression de sorte à obtenir, après refroidissement, une pièce solide (100) dudit polyuréthane modifié (A') d'une 1^{ère} forme déterminée.

2. Procédé d'obtention d'un polyuréthane modifié (A') selon la revendication 1, dans lequel la fonction de greffage de l'au moins une molécule d'activation (B), destinée à la formation d'une liaison covalente avec le polyuréthane (A) est une fonction nucléophile.

3. Procédé d'obtention d'un polyuréthane modifié (A') selon l'une des revendications 1 à 2, dans lequel la fonction d'activation est un acide sulfonique ou une amine tertiaire.

4. Procédé d'obtention d'un polyuréthane modifié (A') selon l'une des revendications 1 à 3, dans lequel l'au moins une molécule d'activation est choisie parmi :
- un acide sulfonique portant des fonctions alcools ou amine, de formule générale R-(SO₃H)ₓ-(OH)_{y}(NH₂)z où R est un radical carboné pouvant être aromatique ou aliphatique, x est le nombre d'acide sulfonique (x>=1), y le nombre de groupement hydroxyl (y>=1) et z le nombre de groupement amine primaire ou secondaire (z>=1) et notamment l'acide 4-hydroxy-3-amino-benzenesulfonique (B"), et/ou
- une amine tertiaire portant un ou plusieurs alcools, de formule générale Nₘ-(R'OHₙ)ₒ avec R' un radical carboné (m>=1) (o>=1) portant une ou plusieurs fonctions hydroxyles (n>=1) et notamment la tétra hydroxyéthyl ethylènediamine (E).

5. Procédé d'obtention d'un polyuréthane modifié (A') selon l'une des revendications 1 à 4, dans lequel le pourcentage massique en molécules d'activation (B) dans la suspension se situe dans une plage allant de 0,05% à 10% en masse, et notamment dans une plage allant entre environ 0,1 et 5 % en masse.

6. Procédé d'obtention d'un polyuréthane modifié (A') selon l'une des revendications 1 à 5, dans lequel l'étape de thermocompression est réalisée dans une plage de température allant de 120°C à 250°C, et une pression comprise entre 30 et 70 bars pendant une durée allant de 1 min à 40 min, notamment à 200°C sous une pression d'environ 40 bars appliquées pendant 20 min.

7. Procédé de remise en forme d'au moins une pièce (100) solide de polyuréthane modifié (A') comprenant les étapes de :
g1) fourniture d'au moins une pièce solide (100) dudit polyuréthane modifié (A') de la 1^{ère} forme déterminée obtenu selon l'une quelconque des revendications 1 à 6,
h1) mise en poudre de l'au moins une pièce solide (100) dudit polyuréthane modifié (A'),
i1) disposition de la poudre dans au moins un moule délimitant au moins une cavité d'une 2^{ème} deuxième conformation déterminée,
j1) application d'une thermocompression de sorte à obtenir au moins une pièce solide (100) de polyuréthane modifié (A') d'une 2^{ème} forme déterminée.

8. Procédé de remise en forme d'une poudre de polyuréthane modifié (A') comprenant les étapes de :
1) fourniture d'une poudre dudit polyuréthane modifié (A') obtenue selon l'une quelconque des revendications 1 à 6,
2) disposition de la poudre dans au moins un moule délimitant au moins une cavité d'une conformation déterminée,
3) application d'une thermocompression de sorte à obtenir au moins une pièce solide (100) de polyuréthane modifié (A') d'une forme déterminée.

9. Polyuréthane modifié (A') par greffage de manière covalente d'au moins une molécule d'activation (B), ladite molécule d'activation (B) comprenant d'une part une fonction de greffage formant une liaison covalente avec un isocyanate (C) dudit polyuréthane modifié (A') et d'autre part une fonction d'activation capable d'abaisser l'énergie d'activation des réactions d'échange dans les liaisons chimiques covalentes dynamiques existantes dans les fonctions uréthane dudit polyuréthane modifié (A').
